# EUROPÄISCHE PATENTSCHRIFT

(11) **EP 3 238 970 B1**
(45) Veröffentlichungstag und Bekanntmachung des Hinweises auf die Patenterteilung: **31.08.2022**
(21) Anmeldenummer: 17161598.2
(22) Anmeldetag: 17.03.2017
(51) Int. Cl.: B60J 7/185, E05B 81/62

(54) **VERFAHREN ZUR ERKENNUNG EINER UNVOLLSTÄNDIGEN CABRIOVERDECKVERRIEGELUNG**
METHOD FOR DETECTING AN INCOMPLETE LOCKING OF A CONVERTIBLE ROOF
PROCÉDÉ DE RECONNAISSANCE D'UN VERROUILLAGE INCOMPLET DE CAPOTE

(30) Priorität: 19.04.2016 DE 102016107231
(43) Veröffentlichungstag der Anmeldung: 01.11.2017
(73) Patentinhaber: Helbako GmbH, 42579 Heiligenhaus (DE)
(72) Erfinder: Glißmann, Guido, 42579 Heiligenhaus (DE); Jäckel, Christoph, 42553 Velbert (DE); Hellmich, Dirk, 47249 Duisburg (DE)
(74) Vertreter: Schulte & Schulte

(56) Entgegenhaltungen:
- DE-A1- 10 108 769
- DE-A1- 19 721 229
- DE-B3-102011 000 391
- DE-U1- 29 707 212
- US-A1- 2014 145 666

## Beschreibung

Die Erfindung betrifft ein Verfahren zur Feststellung des Verriegelungszustands einer motorisch angetriebenen Verriegelung für das Verdeck eines Cabriolets.

Als Cabriolets oder Cabrios bezeichnete PKW mit einem aufklappbaren Dach erfreuen sich großer Beliebtheit. Moderne Cabriolets verfügen über Dächer bzw. Verdecke, die automatisch per Knopfdruck geöffnet und geschlossen werden können. Bestandteil dieses Öffnungs- und Verschließmechanismus des Verdecks ist eine Verriegelung mit einem, zwei oder mehr elektrisch angetriebenen Riegeln, welche im verriegelten Zustand eine kraftschlüssige Verbindung mit einer karosserieseitigen Aufnahme für den Riegel eingehen, die üblicherweise in den die Frontscheibe umgebenden Rahmen integriert ist. Bei den meisten Cabriolets dient als solch eine Aufnahme ein Bolzen, der mit einem dachseitigen Riegel im Verriegelungszustand eine zugfeste Verbindung eingeht. Diese Ver- bzw. Entriegelung steuert ein Motor, in der Regel ein Elektromotor. Nicht zuletzt da Aktivitäten des Fahrers beim Öffnen und Schließen des Verdecks sich bei modernen Fahrzeugen darauf beschränken, dass dieser jeweils einen einzigen Knopf bedient, ist es notwendig, den Öffnungs-, insbesondere jedoch den Schließzustand der Verriegelung zu überwachen, da ein Cabriolet mit nicht vollständig verriegeltem Dach nicht fahrtüchtig ist, respektive eine erhebliche Gefährdung darstellt. Aus der DE 297 07 212 ist ein Schloss für einen Verdeckkastendeckel eines Cabrios bekannt, bei dem eine über ein Antriebsmittel verstellbare Fangfalle eine selbständig einrückende, mechanische Sicherungseinrichtung für ihre Festlegung in der Schließlage geschaffen ist. Die DE 197 21 229 lehrt im Hinblick auf das Schließen des Verdecks, dass während des Schließvorganges des Verdeckes ein Signal eines Überwachungskontaktes anzeigt, dass das Verdeck angehoben ist. Sobald dieses Signal nicht mehr vorhanden ist, steuert das Steuergerät die motorische Betätigungseinrichtung im Sinne eines Verriegelns des Verschlusshakens so lange an, bis ein Signal eines anderen Überwachungskontaktes anzeigt, dass der Verschlusshaken seine Verriegelungsstellung erreicht hat.

Solch ein Elektromotor wird zumeist mit einer vorgegebenen Spannung, die z. B. der Spannung der Fahrzeugbatterie entspricht, angesteuert. Mit den bestehenden technischen Möglichkeiten ist es notwendig, ein oder mehrere Schalter oder Sensoren in die Karosserie und/oder in das Verdeck einzubauen, um ein korrektes Anliegen des geschlossenen Verdecks bzw. eine vollständige Verriegelung zwischen Verdeck und Karosserie zu überwachen und damit zu gewährleisten. Die Montage solcher Sensoren ist allerdings sehr aufwendig, sodass letztlich unnötige Mehrkosten entstehen. Einige Fahrzeugtypen sehen zusätzliche Sensoren vor, die eine sogenannte Luftverriegelung verhindern sollen. Von einer Luftverriegelung spricht man, wenn der Riegel seine eigentliche, der geschlossenen entsprechende Endposition erreicht hat, ohne den Bolzen zu fassen. Es handelt sich damit also um eine nach Stand der Technik durch Sensorik gesondert zu überwachende Verriegelungsstellung, um das Risiko zu eliminieren, das mit einem auf diese Art unverschlossenen Cabrioverdeck einhergeht. Der Einsatz von Schaltern und Sensoren führt darüber hinaus zu Mehrkosten durch den vergleichsweise aufwendigen Einbau, dies auch wegen der benötigten Verkabelung und Sensorik.

Damit stellt sich der vorliegenden Erfindung die Aufgabe, ein Verfahren zur Feststellung des Verriegelungszustands einer motorisch angetriebenen Verriegelung für das Verdeck eines Cabriolets zu schaffen, das sich durch eine besonders kostengünstige Lösung mit der Einsparung diverser Aggregate auszeichnet.

Diese Aufgabe wird erfindungsgemäß dadurch gelöst, dass die Stromaufnahme des die Verriegelung des Verdecks des Cabriolets antreibenden Motors und/oder deren zeitlicher Verlauf erfasst und ausgewertet werden, wobei eine korrekte Verriegelung über einen höheren Strombedarf verfügt, sodass aus einer einem bestimmten Grenzwert überschreitenden Stromaufnahme unmittelbar auf eine korrekte Verriegelung geschlossen werden kann.

Dieser Lösung liegt die Erkenntnis zu Grunde, dass die elektrischen Betriebsparameter des oder der Verriegelungsmotoren zwischen einer korrekten und einer unvollständigen Verriegelung erheblich voneinander abweichen und die Leistung, die aufgebracht werden muss, bis ein verdeckseitiger Riegel seine Position gegenüber einem karosserieseitigen Bolzen eingenommen hat, ist markant höher als im Fall der sogenannten Luftverriegelung, bei welcher der Riegel zwar seine geschlossene Endposition einnimmt, dies jedoch ohne eine kraftschlüssige Verbindung mit dem Bolzen eingegangen zu sein. Diese Tatsache macht sich die Erfindung zu eigen, indem eine oder mehrere Betriebsparameter des Verriegelungsmotors bzw. deren zeitlicher Verlauf abgegriffen und ausgewertet wird, was einen unmittelbaren Rückschluss auf den Verriegelungszustand erlaubt.

So sieht eine Ausführungsform der Erfindung vor, dass die Stromaufnahme des Motors und/oder deren zeitlicher Verlauf erfasst und ausgewertet wird. Eine korrekte Verriegelung verfügt aus den bereits dargelegten Gründen über einen höheren Strombedarf, sodass aus einer einen bestimmten Grenzwert überschreitenden Stromaufnahme unmittelbar auf eine korrekte Verriegelung geschlossen werden kann.

Alternativ oder ergänzend dazu ist vorgesehen, dass die zum Schließen der Verriegelung erforderliche Motorleistung erfasst und ausgewertet wird. Die Motorleistung und damit einhergehend der Strombedarf erhöht sich proportional etwa zu dem Drehmoment, das zur Betätigung der Verriegelung beim Schließen aufgebracht werden muss.

Denkbar ist es in diesem Zusammenhang auch, dass die Spannung, mit welcher der Motor angesteuert wird und/oder deren zeitlicher Verlauf erfasst und ausgewertet wird. Der Auswertung all dieser Parameter liegt die Erkenntnis zu Grunde, dass eine korrekte Verriegelung schlichtweg einen höheren Strombedarf erfordert, was sich auch in Hinblick auf die Spannung bemerkbar macht.

Ein maßgeblicher Vorteil der Erfindung liegt darin, dass die Auswertung der Daten auf Basis bestehender interner Betriebsparameter erfolgt. Es ist in diesem Zusammenhang zweckmäßig, wenn die Spannung, mit welcher der die Verriegelung des Verdecks des Cabriolets antreibende Motor angesteuert wird, dynamisch angepasst wird, um auf veränderliche Gegebenheiten in der geeigneten Weise reagieren zu können.

Ergänzt wird dies dadurch, dass der Motor mittels einer Pulsweitenmodulierung angesteuert wird.

Nach einer weiteren vorteilhaften Ausführungsform der Erfindung ist vorgesehen, dass die Motorspannung durch einen Regler, vorzugsweise durch einen PID-Regler, auf einen vorgegebenen Wert ausgeregelt wird. Diese Regelung bewirkt also, dass Schwankungen der Versorgungsspannung sich nicht mehr auf die Motorspannung übertragen, weil der Regler die Motorspannung auf den vorgegebenen und immer gleichbleibenden Wert ausregelt.

Die Erfindung zeichnet sich insbesondere dadurch aus, dass ein Verfahren zur Feststellung des Verriegelungszustands einer motorisch angetriebenen Verriegelung für das Verdeck eines Cabriolets geschaffen ist, das sich durch den Einsatz weniger, ohnehin vorhandener Komponenten und niedrigen Montageaufwands auszeichnet. Aufwendig einzubauende Schalter und Sensorik bleiben ausgespart, stattdessen werden elektrische Betriebsparameter wie die Stromaufnahme des Motors, die Motorleistung, die vorhandene Spannung etc. abgegriffen und hinsichtlich ihrer Größe und ihres zeitlichen Verlaufs ausgewertet. Die Erfindung macht sich dabei zu Nutze, dass die erforderliche Leistung bei dem vollständigen Verriegeln des Cabriodachs zum Schließen der kraftschlüssigen Verbindung zwischen karosserieseitigem Bolzen und verdeckseitigem Riegel wesentlich höher ist als bei einer sogenannten Luftverriegelung, die letztlich ins Nichts führt und entsprechend praktisch keine Widerstände zu überwinden braucht. Der Einsatz eines PID-Regelers ermöglicht es dabei, eindeutig zwischen einer korrekten und einer unvollständigen Verriegelung unterscheiden zu können.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: den Kurvenverlauf einer vollständig korrekten Verriegelung und
- Figur 2: den Kurvenverlauf einer sogenannten Luftverriegelung.

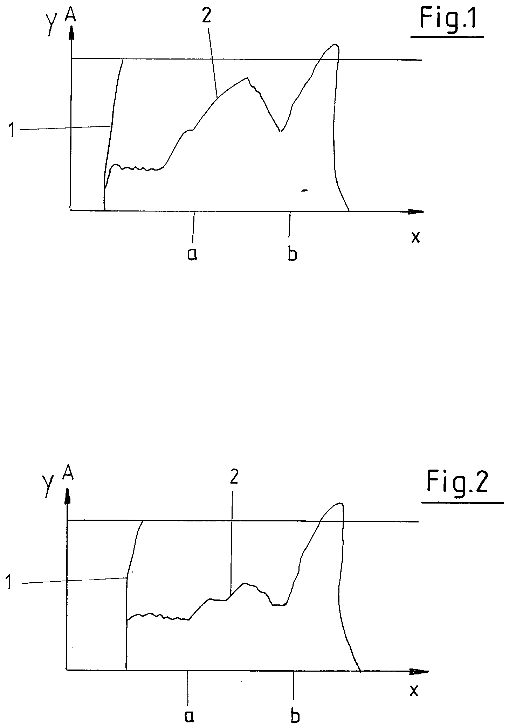

Die Figuren 1 und 2 veranschaulichen den Unterschied zwischen einer korrekten und einer fehlerhaften Verriegelung anhand der Kurven für die Motorspannung (Kurve 1) und für den Motorstrom (Kurve 2).

Bei einer vollständig korrekten Verriegelung, wie sie in Figur 1 wiedergegeben ist, ist eine deutliche Stromerhöhung mit dem entsprechenden Verlauf der Kurve 2 für den Motorstrom in dem Bereich zwischen den Beispielwerten a und b erkennbar. Dieser Bedarf liegt an der Tatsache, dass für den eigentlichen Verriegelungsvorgang zwischen Riegel und Bolzen mechanische Arbeit aufgebracht werden muss.

Bei einer unvollständigen Verriegelung hingegen, die auch als Luftverriegelung bezeichnet wird, und die Figur 2 dargestellt ist, ist eine signifikante Verringerung der Stromaufnahme in dem Bereich zwischen den beiden Beispielwerten a und b erkennbar. Werden die beiden Verläufe in Relation zueinander gesetzt, ergibt sich ein erheblicher Unterschied zwischen den Werten a und b, der einer Auswertung unterliegt und der einen unmittelbaren Rückschluss auf den Verriegelungszustand erlaubt, bedingt durch den geringeren Strombedarf, sodass diese Erkenntnisse dann für die weitere Verarbeitung Verwendung finden können.

## Patentansprüche

1. Verfahren zur Feststellung des Verriegelungszustands einer motorisch angetriebenen Verriegelung für das Verdeck eines Cabriolets, wobei die Stromaufnahme des die Verriegelung des Verdecks des Cabriolets antreibenden Motors und/oder deren zeitlicher Verlauf erfasst und ausgewertet werden, wobei eine korrekte Verriegelung über einen höheren Strombedarf verfügt, sodass aus einer vor dem Ende des Bewegungsverlaufs der Verriegelung einen bestimmten Grenzwert überschreitenden Stromaufnahme unmittelbar auf eine korrekte Verriegelung geschlossen werden kann.

## Claims

1. A method for determining the locking state of a motor-driven lock for the top of a convertible, the current consumption of the motor driving the locking of the top of the convertible and/or its progress over time being recorded and evaluated, with correct locking having a higher power requirement, so that correct locking can be directly concluded from a current consumption that exceeds a specific limit value before the end of the course of movement of the locking device.

## Revendications

1. Procédé de détermination de l'état de verrouillage d'un dispositif de verrouillage motorisé de la capote d'un cabriolet, la consommation électrique du moteur entraînant le verrouillage de la capote du cabriolet et/ou son évolution dans le temps étant enregistrée et évaluée, avec une dispositif de verrouillage correct ayant une exigence de puissance plus élevée, de sorte qu'avant la fin du mouvement du mécanisme de verrouillage, une consommation de courant qui dépasse une certaine valeur limite puisse être directement considérée comme un mécanisme de verrouillage correct.
